# EUROPEAN PATENT APPLICATION

(11) **EP 3 300 575 A1**
(43) Date of publication of application: **04.04.2018**
(21) Application number: 17191343.7
(22) Date of filing: 15.09.2017
(51) Int. Cl.: A01D 41/12

(54) **RESIDUE SPREAD CONTROL USING OPERATOR INPUT OF WIND DIRECTION AND COMBINE BEARING**

(30) Priority: 01.10.2016 US 201615283394
(71) Applicant: Deere & Company, Moline, IL 61265 (US)
(72) Inventor: Vandike, Nathan R, 68163 Mannheim (DE); Thomsen, Drew, 68163 Mannheim (DE); Readel, Paul, 68163 Mannheim (DE); Bruns, Aaron, 68163 Mannheim (DE); Pope, Glenn E, 68163 Mannheim (DE); Yanke, Bradley K, 68163 Mannheim (DE)
(74) Representative: Holst, Sönke

(57) **Abstract**

A residue spreader control system (500) for an agricultural combine (100) is provided that includes an operator input device (510) for entering a wind direction and wind speed, a satellite navigation receiver (512) for providing signals indicating the bearing of the agricultural combine, a residue spreader (130) including crop residue deflectors (132) at the rear of the combine that are movable by an actuator (134) to steer the crop residue to the left or the right of the rear of the combine, and an ECU (501) connected to all of these devices to receive the wind direction and/or speed from the operator, to determine the bearing of the combine traveling through the field harvesting crops, and to calculate a control signal to applied to the actuator (134), wherein the control signal repositions the actuator (134) and crop deflectors (132) to counteract the effects of wind improperly blowing the residue off to one side of the combine.

## Description

### Field of the Invention

This invention relates to agricultural combines. More particularly, it relates to systems for controlling the distribution of crop residue in agricultural combines.

### Background of the Invention

Agricultural combines gather crop plants from the ground, separate the actual crop from the residue, and then distribute the residue over the ground behind the combine. It is desirable to spread residue evenly over the ground behind the combine, covering the ground that has just been harvested. Typically this is done by ejecting the residue away from the rear of the combine at high speed. This is typically done accelerating the residue and throwing it against steering vanes that steer it into a wide swath, typically 10-20 m wide. Alternatively, a rotary spreader configured like a large fan can spread the crop over the ground.

Wind can blow the crop residue to one side or the other as it is flung from the rear of the combine, travels through the air, and is deposited on the ground. For this reason, the vanes and/or spreaders can be steered by the operator to steer the swath of crop residue ejected into the air.

If the crop residue is blown by the wind more to the right side of the combine, the vanes and/or spreaders can be steered to the left, thus ejecting the crop residue more to the left, and thus counteracting the wind's effect to blow the crop residue to the right. When the crop residue is blown by the wind more to the left side of the combine, the vanes and/or spreaders can be similarly steered to the right to counteract the wind.

In this manner, an even distribution of crop residue can be provided on the ground regardless of the wind direction.

To provide the appropriate amount of correction, the combine must determine what direction the wind is blowing with respect to the combine. For example, if the wind is blowing toward the right side of the combine, the combine must steer the vanes and/or spreaders to the left. If the wind is blowing toward the left side of the combine, the combine must steer the vanes and/or spreaders to the right.

Since the combine changes direction many times as it travels through the field harvesting crops, the relative wind direction also changes. One way of determining the relative wind direction is to provide an anemometer mounted to the combine. The signals generated by the combine-mounted anemometer are provided to the control system that controls the vanes and/or spreaders. The signal provided by a combine-mounted anemometer indicate the relative wind direction.

The cost of the anemometer is not insignificant, however. It would be beneficial therefore to provide an indication of wind direction and/or wind speed indirectly (for example by having the operator enter the wind direction and/or wind speed), without the need to directly measure wind speed and/or wind direction with an anemometer. It would be beneficial also to calculate the degree of steering of the vanes and/or spreaders using that operator-entered wind speed and/or wind direction to control the positioning of the vanes and/or spreaders. It is an object of this invention to provide such a system.

### Summary of the Invention

In accordance with a first aspect of the invention, a residue spreader control system of an agricultural combine is provided that includes an operator input device on the agricultural combine configured to receive a wind direction input by an operator of the agricultural combine; a satellite navigation receiver on the agricultural combine configured to receive satellite signals indicating the location of the agricultural combine in a field harvesting crops and to transmit signals indicating location and bearing of the agricultural combine; crop deflectors pivotally supported on the rear of the agricultural combine, wherein the crop deflectors are disposed to receive crop residue from the combine and spread crop residue over the ground; an actuator coupled to the crop deflectors to steer the crop deflectors; and at least one ECU configured to receive the wind direction from the operator input device, to receive signals indicating location and bearing from the satellite navigation receiver, to determine a lateral component of wind based upon the wind direction input in combination with a combine bearing derived from the signals indicating location and bearing of the agricultural combine, and to control the actuator to steer crop residue in a direction that counteracts the force of the wind.

The ECU may be configured to calculate a difference between the wind direction and the bearing of the combine.

The ECU may be configured to calculate the lateral component of wind based upon the difference between the wind direction and the bearing of the combine.

The ECU may be configured to control the actuator based upon the lateral component of wind.

The lateral component of wind may be a component that travels generally perpendicular to the bearing of the agricultural combine as it travels through the agricultural field harvesting crops.

The ECU may recalculate the difference between the wind direction and the bearing of the combine at periodic intervals as the agricultural combine travels to the agricultural field harvesting crop.

In accordance with another aspect of the invention, a method of spreading residue of an agricultural combine over a field includes the steps of receiving a wind direction input from an operator of the agricultural combine; receiving satellite signals indicating the location of the agricultural combine in a field; deriving a bearing of the agricultural combine based upon the satellite signals; determining a lateral component of wind based upon the wind direction input from the operator in combination with the bearing of the agricultural combine; calculating a control signal for an actuator coupled to crop deflectors fixed to the rear of the agricultural combine; and applying the control signal to the actuator to steer crop residue in a direction that counteracts the force of the wind.

The step of determining a lateral component of wind may include the step of taking the difference of the wind direction input from the operator and the bearing of the agricultural combine.

The step of calculating a control signal further may include the step of calculating the control signal based upon the difference of the wind direction input from the operator and the bearing of the agricultural combine.

### Brief Description of the Drawings

- Fig. 1: is a side view of an agricultural combine having a residue spread control system in accordance with the present invention.
- Fig. 2: is a plan view of the agricultural combine of Figure 1 showing its movement around an agricultural field harvesting crops.
- Fig. 3: is a chart showing the estimated speed of a lateral component of wind as a function of the bearing of the agricultural combine following the path shown in Figure 2.
- Fig. 4: is a schematic diagram of the residue spread control system of the agricultural combine of Figures 1-3.
- Fig. 5: is a flowchart showing the programmed operation of the residue spread control system of the agricultural combine of Figures 1-3.
- Fig. 6: is a graph showing the difference between the bearing of the wind and the bearing of the combine (x-axis) and the normalized lateral (side-to-side) component of the wind (y-axis).

### Detailed Description of the Preferred Embodiments

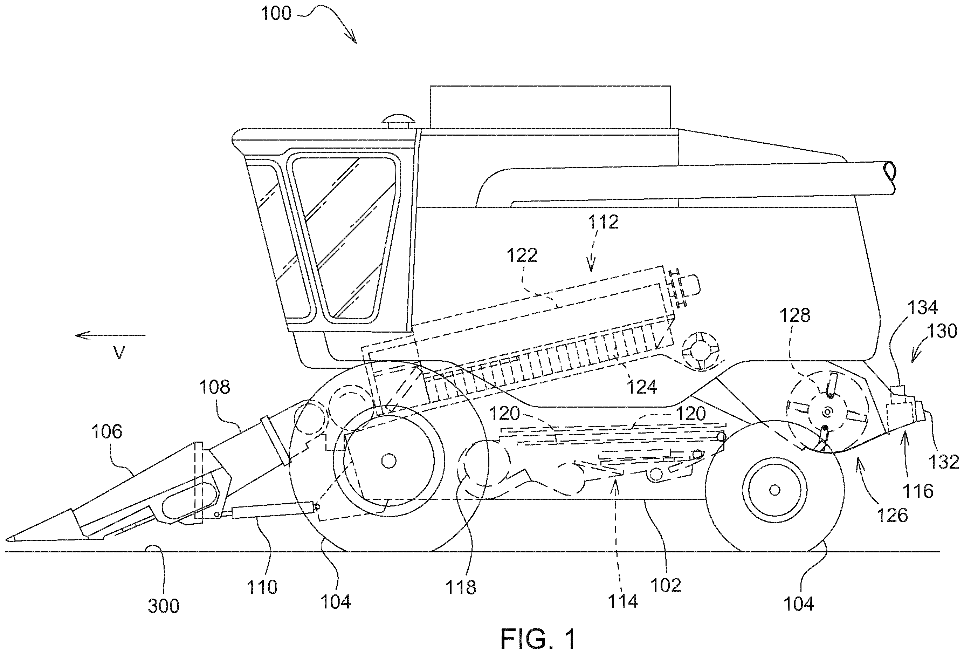

Referring to Figure 1, an agricultural combine 100 is configured to travel through an agricultural field harvesting crops. The combine 100 comprises a chassis 102 supported on wheels 104. A harvesting head 106 is supported on a feeder house 108 that is supported on the chassis 102. The feeder house 108 (and hence the harvesting head 106) can be raised and lowered by actuators 110 that are coupled to and between the feeder house 108 and the chassis 102. The chassis 102 supports a threshing and separating system 112. The threshing and separating system 112 is disposed behind the feeder house 108. The combine 100 also comprises a cleaning system 114 disposed below the threshing and separating system 112. A residue distribution system 116 is disposed behind the threshing and separating system 112 and the cleaning system 114.

As the agricultural combine 100 is driven through the field, the harvesting head 106 severs crop plants adjacent to the ground and conveys them to the feeder house 108. The feeder house 108 has an internal conveyor (not shown) of conventional arrangement that carries the cut crop material upward and into an inlet of the threshing and separating system 112. The threshing and separating system 112 threshes and separates the cut crop material into flows of crop residue and crop (i.e. grain). The grain falls into the cleaning system 114 where it is cleaned using a flow of air that is directed upward through the grain falling into the cleaning system 114. A fan 118 generates the flow of air. Sieves 120 direct the flow of air through the grain falling into the cleaning system 114. Light crop residue (i.e. husks, fines, dust, etc.) is carried rearward in the flow of air and is deposited on the ground.

The threshing and separating system 112 comprises an elongate, cylindrical threshing rotor 122 that is disposed in a concave 124. The concave 124 is formed as a half cylindrical shell having an evenly perforated surface. These perforations permit the concave to function as a grating or screen through which grain can pass but most of the residue does not. The grain falls through the perforations in the concave and downward into the cleaning system 114. The bulk of the crop residue is conveyed rearward between the rotor 122 and the concave 124 until it is released at the rear of the rotor and concave. The crop residue then falls downward into a chopper 126 that chops the residue between a row of stationary knives and rotating knives extending from a chopper cylinder 128.

This chopping process accelerates the crop residue and throws it backward into a residue spreader 130. The residue spreader 130 includes crop deflectors 132 that are coupled to an actuator 134. The crop deflectors 132 can be steered by the actuator 134 to steer the crop residue exiting the combine in a side-to-side direction.

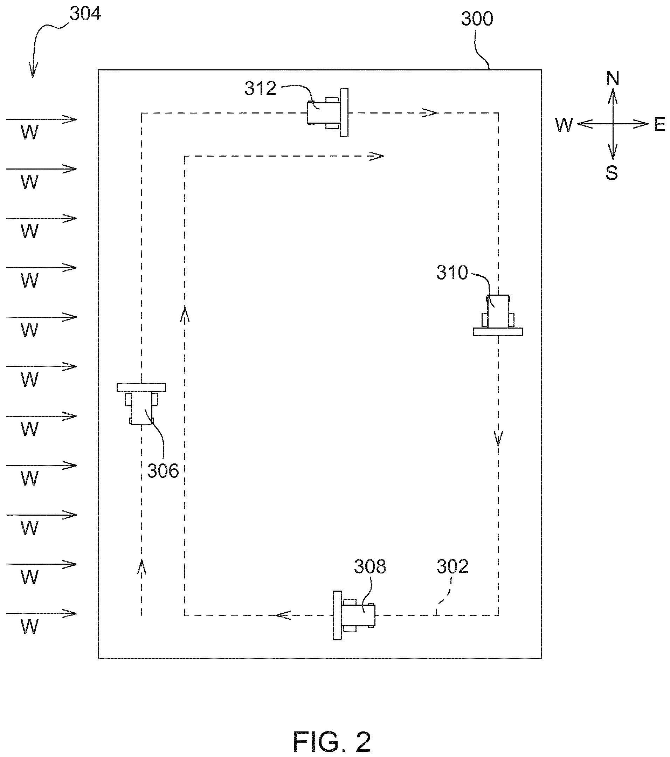

Referring to Figure 2, the agricultural combine 100 travels through an agricultural field 300 following a path 302. Wind 304 is blowing across the field in a direction "W".

When the agricultural combine is in position 306, the wind 304 is blowing directly on the left side of the combine. As a result, the crop residue expelled from the combine is pushed by the wind toward the right side of the combine. Unless this wind-force is resisted, the crop residue will not be spread evenly behind the combine, but will be blown toward the right. This will leave some of the swath of ground harvested by the combine empty of residue. It is for this reason that the residue distribution system signals the actuator 134 to move the crop deflectors 132 and steer the crop residue more to the left side of the combine, and therefore against the force of the wind 304.

When the agricultural combine is in position 308, the wind 304 is blowing directly against the front of the combine 100. In this position, the wind 304 does not steer the crop residue ejected from the combine either to the left or to the right. When the combine is in position 308, the residue distribution system signals the actuator 134 to move the crop deflectors 132 to a central, neutral position that does not direct the crop residue either to the right or to the left, but directly rearward.

When the agricultural combine is in position 310, the wind 304 is blowing directly against the right side of the combine 100. In this position, the wind 304 steers the crop residue ejected from the combine toward the left side of the combine. When the combine is in position 310, the residue distribution system signals the actuator 134 to move the crop deflectors 132 and steer the crop residue more to the right side of the combine, and therefore against the force of wind 304.

When the agricultural combine is in position 312, the wind 304 is blowing directly against the rear of the combine 100. In this position, the wind 304 does not steer the crop residue ejected from the combine either to the left or to the right. When the combine is in position 312, the residue distribution system signals the actuator 134 to move the crop deflectors 132 to a central, neutral position that does not direct the crop residue either to the right or to the left, but directly rearward.

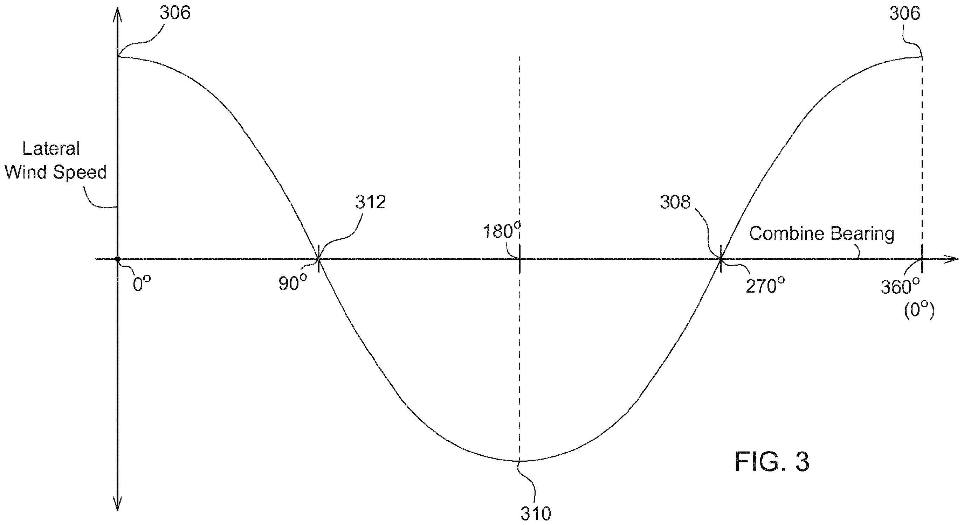

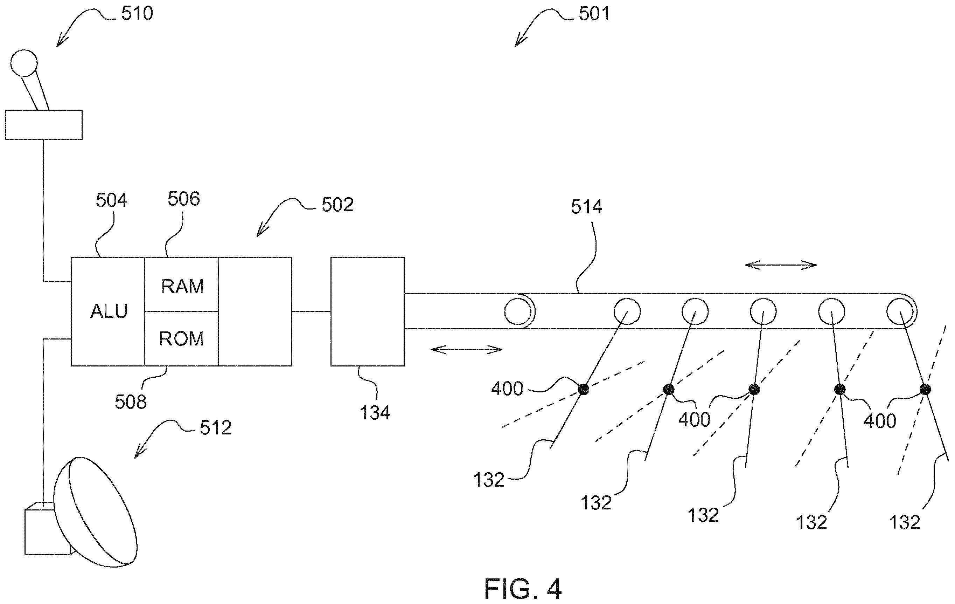

Figure 3 illustrates the lateral wind speed (and hence the lateral force of the wind on the residue being expelled from the rear of the combine) relative to the combine as a function of the heading of the combine as it travels through the field. When the combine is traveling due north (i.e. a bearing of 0° as illustrated by position 306 in Figure 3) the wind 304 is blowing directly on the left side of the combine 100, and the wind speed/force is greatest on the left side of the combine. When the combine turns to an easterly direction (i.e. a bearing of 90° as illustrated by position 312 in Figure 2) the wind is blowing directly on the rear of the combine 100, and therefore there is no left/right component of wind. When the combine turns to a southerly direction (i.e. a bearing of 180° as illustrated by position 310 in Figure 3) the wind 304 is blowing directly on the right side of the combine 100 and thus the wind speed/force is greatest on the right side of the combine. This wind speed/force is shown as a negative value in the graph of Figure 4. As the combine 100 turns around and around as it follows the path 302, it will change its bearing from 0°, to 90°, to 180°, to 270°,and then back to 0°. As a combine 100 follows the path 302, it travels through all the intermediate bearings from 0° to 360°. At every one of these individual bearings, there is a corresponding wind speed/force applied to the residue being expelled from the back of the combine. And for every one of these individual bearings, there is a corresponding position for the crop deflectors 132 to counteract the force of the wind 304 and insure the crop residue is spread evenly behind the combine 100. Although only 4 specific bearings of the agricultural combine are illustrated in Figure 3, no matter what the combine's bearing is, there is a corresponding position of the crop deflectors 132 that can be calculated from the lateral wind speeds shown in Figure 4 to counteract the wind speed/force.

The curve shown in Figure 3 is generally a sinusoidal curve, although it may be modified to accommodate irregularities in the combine that block the wind flow. These irregularities in wind speed/force across the rear of the combine may be due to protrusions, brackets, body panels, or other devices that impede or enhance the flow of air across the rear the combine when the combine is at particular bearings.

In Figure 4, a residue spreader control system 500 is illustrated that steers the crop deflectors 132 based upon the wind speed and wind direction input by the operator of the combine 100.

An electronic control unit 501 (a.k.a. "ECU") comprises a digital microprocessor 502, an arithmetic logic unit 504 (a.k.a. "ALU"), a random-access memory 506 (a.k.a. "RAM"), and read-only memory 508 (a.k.a. "ROM"). A series of digital instructions is stored in the ROM 508 controls the operation of the ALU 504 and thus controls the operation of the spreader control system 500. The RAM 506 stores intermediate calculations performed by the ALU 504 as the ALU executes the programmed instructions.

The ECU 501 is connected to an operator input device 510. The operator input device 510 is configured to receive signals from the operator and to transmit those signals to the ECU 501 for use by the ECU 501 as it executes its programmed instructions.

The ECU 501 is also connected to the actuator 134. The ECU 501 is configured to command the actuator 134 to move, and to steer the crop deflectors 132 to which the actuator 134 is mechanically coupled.

The ECU 501 is also connected to a satellite navigation receiver 512 (e.g. GPS, GLONASS or similar system). The satellite navigation receiver 512 transmits signals to the ECU 501 indicative of the position of the combine as it travels through the field harvesting crops.

The operator input device 510 may be a joystick, switch, knob, quadrant lever, keyboard, touchscreen, or other device that is configured to be manipulated by the operator and to generate a signal corresponding to the operator's manipulation. The operator input device 510 may be a microphone in combination with a voice recognition system that responds to spoken operator commands.

The ECU 501 may be a single ECU, or it may be several ECUs coupled together in a network and that are collectively programmed to perform the functions described herein.

The actuator 134 may be a hydraulic, electric, or pneumatic actuator. It may be a linear or rotary actuator. In the example of Figure 4, the actuator 134 is a linear actuator and is coupled to a linkage 514. As the shaft of actuator 134 extends (responsive to signals received from the ECU 501) it moves linkage 514, which in turn pivots the crop deflectors 132 to the left about each of their pivot points 400. In this position, the crop deflectors 132 steer the crop residue toward the left side of the combine. As the actuator 134 retracts (again, responsive to signals received from the ECU 501) it moves linkage 514, which in turn pivots the crop deflectors 132 to the right. In this position the crop deflectors 132 steer the crop residue toward the right side of the combine. In an alternative arrangement, the actuator 134 may be a motor coupled to crop deflectors that form blades on a fan. As the motor spins, it impacts and ejects crop residue. In such arrangements, crop is thrown farther from or nearer to the agricultural combine based upon the speed at which the motor is driven. In these arrangements, the ECU 501 controls the speed of the motor (actuator 134) and therefore how far the crop is thrown to one side or the other of the combine.

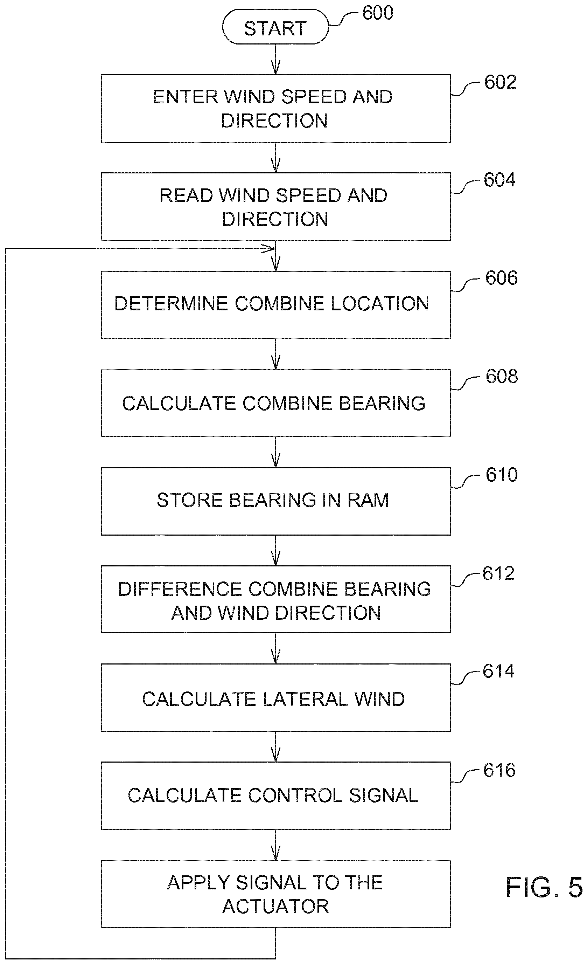

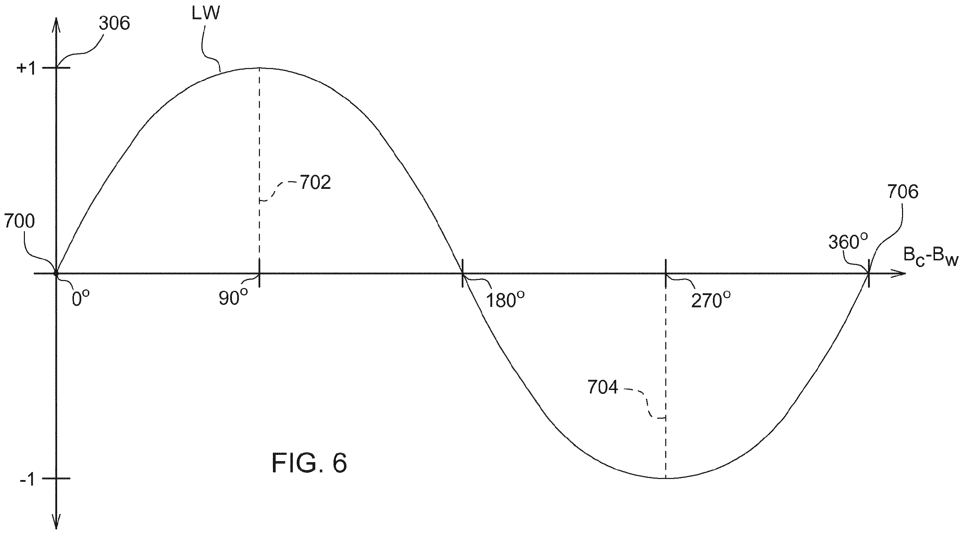

Figure 5 shows the programmed operation of the residue spreader control system 500. The operation illustrated in Figure 6 is provided by the programmed instructions executed by the ALU 504 of the ECU 501 and by interactions with the operator of the combine 100.

In step 600, the operation starts.

In step 602, the operator enters the wind direction (i.e. the bearing of the wind, Bw) and the wind velocity using the operator input device 510.

In step 604, the ECU 501 reads the bearing of the wind (Bw) and the wind velocity from the operator input device 510 and stores it in RAM 506.

In step 606, the satellite navigation receiver 512 determines two or more successive locations of the combine 100 and communicates these locations of the combine to the ECU 501.

In step 608, the ECU 501 calculates the bearing of the combine (Bc) based upon the two or more successive locations provided by the satellite navigation receiver 512.

In step 610, the ECU 501 stores this bearing in RAM 506.

In step 612, the ECU 501 differences the bearing of the combine (Bc) and the wind direction entered by the operator (i.e. the bearing of the wind (Bw). This difference between the bearing of the wind and the bearing of the combine indicates the direction of the wind relative to the combine.

In step 614, the ECU 501 calculates the normalized lateral (side-to-side) component of the total wind by looking up the normalized lateral (side-to-side) component of total wind in a lookup table expressing the curve shown in the chart of Figure 6. Alternatively, the ECU 501 calculates the lateral component of side-to-side wind by taking the sine of the difference between the bearing of the wind and the bearing of the combine.

In step 616, the ECU 501 calculates a control signal that can be applied to the actuator 134 that will move the crop deflectors 132 sufficient to counteract the lateral (side-to-side) component of total wind.

In step 618, the ECU 501 applies the control signal to the actuator 134, thereby causing the actuator 134 to steer the crop deflectors 132 sufficient to counteract the lateral (side-to-side) component of total wind.

After step 618, the ECU 501 returns to step 606 and repeats the process of calculating the combine bearing and changing the position of the actuator 134 and crop deflectors 132. Note that the ECU 5013 uses the wind direction and wind speed entered by the operator in step 604 in each of the subsequent calculations.

When the normalized lateral component of total wind from step 614 is plus one (+1) -- i.e. the lateral wind is blowing directly on the left side of the combine 100 -- the position of the actuator 134 calculated by the ECU 501 in the process shown in Figure 5 will steer the crop deflectors 132 to the left such that they deflect crop as far as possible to the left, thereby resisting the wind from the left, which would otherwise deflect the crop to the right.

When the normalized lateral component of total wind from step 614 is zero (0) -- i.e. the lateral wind is blowing directly on the rear of the combine or directly on the front of the combine and hence the lateral (side-to-side) cross wind has a zero velocity -- the position of actuator 134 calculated by the ECU 501 will steer the crop deflectors 132 directly rearward (i.e. not deflecting the crop either to the left or to the right).

When the normalized lateral component of total wind from step 614 is minus one (-1) -- i.e. the lateral wind is blowing directly on the right side of the combine 100 -- the position of the actuator 134 calculated by the ECU 501 will steer the crop deflectors to the right such that they deflect crop as far as possible to the right, thereby resisting the wind from the right which would otherwise deflect the crop to the left.

In step 616, the ECU 501 transmits the calculated control signal to the actuator 134. This causes the actuator 134 to steer the crop deflectors 132 in a direction that resists the action of any cross wind at the rear of the combine.

The chart in Figure 6 correlates the difference between the bearing of the wind and the bearing of the combine (Bc-Bw) and the normalized lateral (side-to-side) component of the wind (i.e. "LW"). Figure 4 illustrates the same relationship. The greater the lateral wind at any particular combine bearing, the farther the residue spreader control system will have to steer the crop deflectors in order to counteract the wind. Thus, the magnitude of the normalized lateral component of the wind is generally proportional to the amount the crop deflectors must be steered to one side or the other.

When the wind is blowing (from any particular direction) and the combine is traveling in that same direction (i.e. the combine is traveling head on into the wind), then Bc-Bw will equal zero. There is no lateral component of the wind "LW", and therefore the normalized lateral wind is zero (0). See 700.

Similarly, when the wind is blowing directly on the left side of the combine, the difference in bearing between wind and the bearing of the combine (Bc-Bw) is 90°, and the normalized lateral wind is at its maximum of one (+1). See 702.

Similarly, when the wind is blowing directly on the rear of the combine, the difference in bearing between the wind and the bearing of the combine (Bc-Bw) is 180° and the normalized lateral wind is zero (0).

Similarly, when the wind is blowing directly on the right side of the combine, the difference in bearing between the wind and the bearing of the combine (Bc-Bw) is 270° and the normalized lateral wind speed is at its maximum of minus 1 (-1).

The normalized wind speed of the wind in the 90° orientation (wind blowing directly on the left side), and the speed in the 270° orientation (wind blowing directly on the right side) are the same, as one would expect. The sign associated with the normalized wind speed (+1, -1) indicate that the wind is a traveling in opposing directions (on the left side at 90°, and on the right side at 270°).

In sum, a residue distribution system 116 of an agricultural combine 100 is configured to receive a wind direction input by an operator on an operator input device, to calculate a bearing of the agricultural combine based upon the output of the satellite navigation receiver, to determine a lateral (i.e. side-to-side) component of wind based upon the bearing of the agricultural combine in combination with the wind direction input by the operator, and to steer crop residue leaving the combine in a direction to counteract the wind.

It should be noted that a number of modifications to the described embodiment are possible. For example, instead of the movable crop deflectors, one could use a straw spreader with two rotating spreader fans located side-by-side downstream the straw chopper 126 with variable rotation speed controlled by the ECU 501 (cf. EP 2 119 338 A2, the contents of which incorporated herein by reference) and/or position-variable shrouds controlled by the ECU 501 (cf. DE 103 42 922 A1, the contents of which incorporated herein by reference). The controlled spreader fans and/or shrouds would then be considered as crop deflectors in the sense of to the claims.

## Claims

1. A residue spreader control system of an agricultural combine comprising:
an operator input device on the agricultural combine configured to receive a wind direction input by an operator of the agricultural combine;
a satellite navigation receiver on the agricultural combine configured to receive satellite signals indicating the location of the agricultural combine in a field harvesting crops and to transmit signals indicating location and bearing of the agricultural combine;
crop deflectors pivotally supported on the rear of the agricultural combine, wherein the crop deflectors are disposed to receive crop residue from the combine and spread crop residue over the ground;
an actuator coupled to the crop deflectors to steer the crop deflectors; and
at least one ECU configured to receive the wind direction from the operator input device, to receive signals indicating location and bearing from the satellite navigation receiver, to determine a lateral component of wind based upon the wind direction input in combination with a combine bearing derived from the signals indicating location and bearing of the agricultural combine, and to control the actuator to steer crop residue in a direction that counteracts the force of the wind.

2. The residue spreader control system of Claim 1, wherein the ECU is configured to calculate a difference between the wind direction and the bearing of the combine.

3. The residue spreader control system of Claim 2, wherein the ECU is configured to calculate the lateral component of wind based upon the difference between the wind direction and the bearing of the combine.

4. The residue spreader control system of Claim 3, wherein the ECU is configured to control the actuator based upon the lateral component of wind.

5. The residue spreader control system of Claim 4, wherein the lateral component of wind is a component that travels generally perpendicular to the bearing of the agricultural combine as it travels through the agricultural field harvesting crops.

6. The residue spreader control system of Claim 1, wherein the ECU recalculates the difference between the wind direction and the bearing of the combine at periodic intervals as the agricultural combine travels to the agricultural field harvesting crop.

7. A method of spreading residue of an agricultural combine over a field comprising the steps:
receiving a wind direction input from an operator of the agricultural combine;
receiving satellite signals indicating the location of the agricultural combine in a field;
deriving a bearing of the agricultural combine based upon the satellite signals;
determining a lateral component of wind based upon the wind direction input from the operator in combination with the bearing of the agricultural combine;
calculating a control signal for an actuator coupled to crop deflectors fixed to the rear of the agricultural combine; and
applying the control signal to the actuator to steer crop residue in a direction that counteracts the force of the wind.

8. The method of distributing residue of Claim 7, wherein the step of determining a lateral component of wind further comprises the step of taking the difference of the wind direction input from the operator and the bearing of the agricultural combine.

9. The method of distributing residue of Claim 8, wherein the step of calculating a control signal further comprises the step of calculating the control signal based upon the difference of the wind direction input from the operator and the bearing of the agricultural combine.
